# EUROPEAN PATENT SPECIFICATION

(11) **EP 1 096 847 B1**
(45) Date of publication and mention of the grant of the patent: **28.08.2002**
(21) Application number: 99928061.3
(22) Date of filing: 17.06.1999
(51) Int. Cl.: A01B 15/14

(54) **LATERAL ADJUSTMENT MECHANISM FOR FULLY MOUNTED PLOUGH**
MECHANISMUS ZUR SEITLICHEN JUSTIERUNG EINES AUFSATTELPFLUGS
MECANISME DE REGLAGE LATERAL POUR CHARRUE ENTIEREMENT ASSEMBLEE

(30) Priority: 10.07.1998 GB 9814894
(43) Date of publication of application: 09.05.2001
(73) Proprietor: KVERNELAND KLEPP AS, N-4344 Kvernaland (NO)
(72) Inventor: SKJAEVELAND, Magne, N-4344 Kvernaland (NO)
(74) Representative: Orr, William McLean
(86) International application number: GB9901939
(87) International publication number: WO00002439

(56) References cited:
- WO-A-97/15177
- FR-A- 2 523 398
- GB-A- 2 119 614
- GB-A- 2 122 464
- GB-A- 2 170 684

## Description

This invention relates to a fully mounted plough having a plough frame, coupling means at the forward end of the frame to fully mount the plough on the rear of a propelling vehicle, a number of plough bodies spaced apart along the length of the plough frame, and a lateral adjustment mechanism for moving the plough frame laterally relative to the coupling means when it is required to adjust the plough positions of the plough bodies relative to the propelling vehicle.

It is known from FR-A-2523398 to provide a fully mounted plough of the above general type, and in which:
(a) the plough frame includes a plough beam having supports arranged along its length and each mounting a respective plough body, said supports being pivotally mounted on the beam via respective first pivot;
(b) a control rod extends alongside the plough beam and is pivotally connected to said supports via respective second pivots;
(c) the adjustment mechanism includes a control arm mounted on the plough beam and which is operative to control the lateral position of the plough beam relative to the coupling means, said control arm being pivotally connected to the plough beam and to the control rod via third and fourth pivots, respectively;
(d) the first and second pivot associated with each support, together with said third and fourth pivots, are located each at a respective corner of a parallelogram type linkage, whereby during lateral adjustment of the plough beam, the supports mounting the plough bodies always face in the same ploughing direction;
(e) the coupling means includes a mounting bracket which is connectable to the rear of the propelling vehicle and to which the control arm is connected via a pair of parallel links;
(f) each of said links is pivotally connected at one end to the mounting bracket via a respective fifth pivot and at its opposite end is pivotally connected to the control arm via a respective sixth pivot; and,
(g) the pairs of fifth and sixth pivots are located at the corners of a parallelogram so that the links function as a parallelogram linkage to move the plough beam and the control rod laterally.

In traditional ploughing methods, a plough is coupled to the rear of a propelling vehicle (usually an agricultural tractor), in such a way that the front and rear wheels of the tractor on one side can be driven along a furrow formed during a previous pass of the plough, while the plough bodies form a further parallel and equally spaced set of furrows.

The tractor usually has standard (relatively narrow) tyres, and which are well able to be driven along an already ploughed furrow, without having any significant adverse effect on the turned-over soil alongside the furrow in which the tractor wheels are running.

However, agricultural tractors are now being manufactured with ever-increasing power outputs, so as to be able to carry out a greater amount of working operations per unit time, in order to speed up the working of the land. Ploughs are being designed with ever increasing numbers of plough bodies, so that a greater number of furrows can be formed during each pass of the plough, and therefore this requires tractors to have increased traction in order to pull the plough bodies through the ground.

All of these factors result in tractors becoming larger, and heavier, and which therefore increases the ground pressure exerted by the wheels of the tractor, and which is now being recognised as a significant disadvantage in having an adverse effect on soil structure by reason of "soil compaction". The logical way to reduce the ground pressure applied by the tractor wheels is to increase the ground contact area of each wheel tyre, and which is achieved by increasing the width of the tyre. However, this results in the wheels no longer being able to run along a furrow as per traditional ploughing methods.

The present invention therefore seeks to provide an improved design of plough which can be fully mounted on the rear of a tractor or other propelling vehicle in such a way that the plough frame can easily be adjusted laterally relative to its mounting on the tractor, so that the furrows formed by the plough bodies in one pass can be spaced laterally from an adjacent furrow of a set of furrows formed in a previous pass and by any required amount, and without need for the tractor wheels to be driven along the adjacent furrow.

The invention therefore is particularly applicable to use with tractors having wider tyres, though of course it should be understood that the invention is not restricted to such use, and may of course be used with tractors having standard type tyre widths. The plough of the invention may also be used with belt-propelled tractors and vehicles having endless tracks.

According to the invention there is provided a plough as defined in claims 1.

A plough according to the invention therefore can be readily fully mounted on the rear of a propelling vehicle, such as a tractor, and have the position of the plough beam adjusted laterally as required. This means that it is no longer necessary for the wheels of the tractor on one side thereof always to run in a previously formed furrow while pulling the plough through unploughed ground to form parallel furrows equally spaced from each other laterally.

The invention may be applied to a simple design of plough i.e. of the non reversible type, in which case a single plough body will be mounted on each support. However, the invention may be applied to reversible ploughs, in which case each support will mount a reversible pair of plough bodies.

The invention may be applied to a reversible plough, in which case the mounting bracket may incorporate suitable means to allow the plough beam to rotate about a generally horizontal axis extending parallel to the ploughing direction, and through approximately 180°, in order to revere the plough bodies.

A plough according to the invention therefore can be fully mounted on the rear of an agricultural tractor having wide tyres, and which therefore is unable to run along the previously furrow. A plough according to the invention may also be mounted as the rear of a tractor having standard width tyres, or to tractors having belts, or to an endless track type of propelling vehicle.

A preferred embodiment of fully mounted plough according to the invention will be now be described in detail, by way of example only, with reference to the accompanying drawings, in which:
Figure 1 is a plan view of part of a fully mounted reversible plough, and with a plough beam adjusted to a position for right side ploughing;
Figure 2 is a plan view showing the plough beam laterally adjusted to one of a number of different possible further ploughing position in which right side ploughing can take place;
Figure 3 is a plan view showing pairs of reversible plough bodies and different laterally adjusted ploughing positions which can be taken up, again for right side ploughing.

Referring now to the drawings, the illustrated embodiment is a reversible plough, which is intended to be fully mounted at the rear of a tractor having wide tyres, and which is therefore unable to run with the tractor wheels in the furrow of a previously formed set of furrows during a previous pass of the plough. However, the invention is applicable to simpler designs of plough, having non reversible plough frames, although such an embodiment is not shown in the drawings.

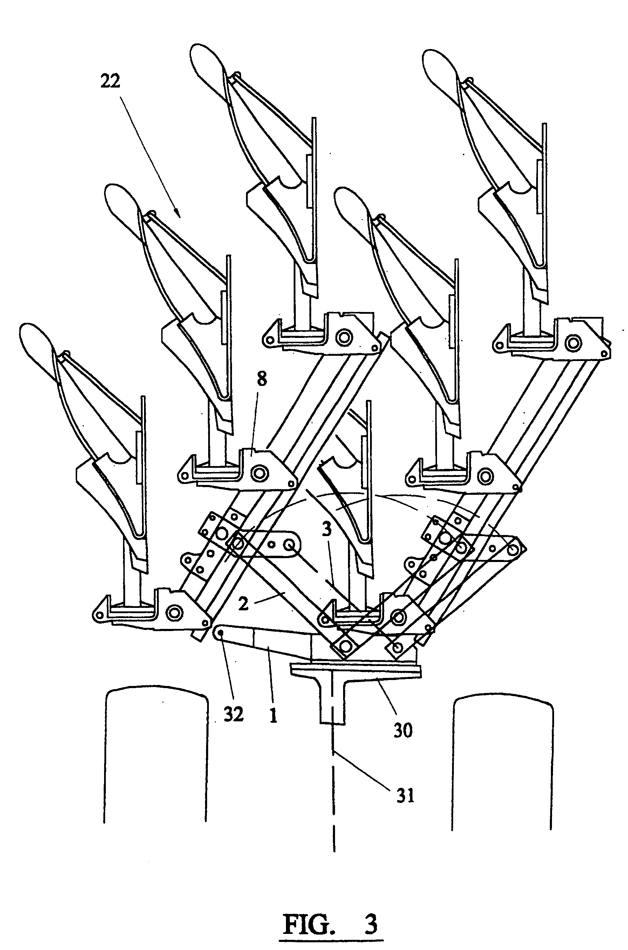

The plough is designated generally by reference 20 and has a plough frame 21 including a plough beam 6 carrying supports 8 arranged along its length, and each being adapted to mount a respective plough body thereon. The supports 8 are spaced apart from each other along the length of the plough beam 6, and as will be apparent from Figure 3, each support 8 actually mounts a respective pair of reversible plough bodies 22. A lateral adjustment mechanism is provided, which is described in more detail below, and which serves to move the plough frame laterally when it is required to adjust the ploughing positions taken up by the plough bodies, relative to the propelling vehicle (not shown) to which the plough is intended to be coupled. Coupling means is provided at the forward end of the frame 21, and taking the form of a mounting bracket 1, and which serves to couple the plough frame via a headstock 30 (see Figure 3) to the rear of a propelling vehicle, such as an agricultural tractor having wide tyres. The headstock 30 is designed to be able to be fully mounted on the usual three-point linkage at the rear of a tractor in a manner which will be well known to those of ordinary skill in the art, and which therefore does not need to be more fully disclosed herein.

The supports 8 are pivotally mounted along the length of the plough beam 6 via respective first pivots 23, and a control rod 7 extends alongside the plough beam 6, and is pivotally connected to the supports 8 via respective second pivots 24. The first and second pivots 23 and 24 of the supports 8 are arranged each at the corner of a parallelogram, so that upon lateral adjustment of the plough beam 6 and control rod 7, the supports 8 always face in the same direction i.e. so that the plough bodies 22 always face in the ploughing direction, regardless of whatever laterally adjusted position is taken up. This will be clearly apparent from Figure 3, showing different laterally adjusted positions taken up by the plough bodies 22, although all being maintained in a position suitable for right side ploughing.

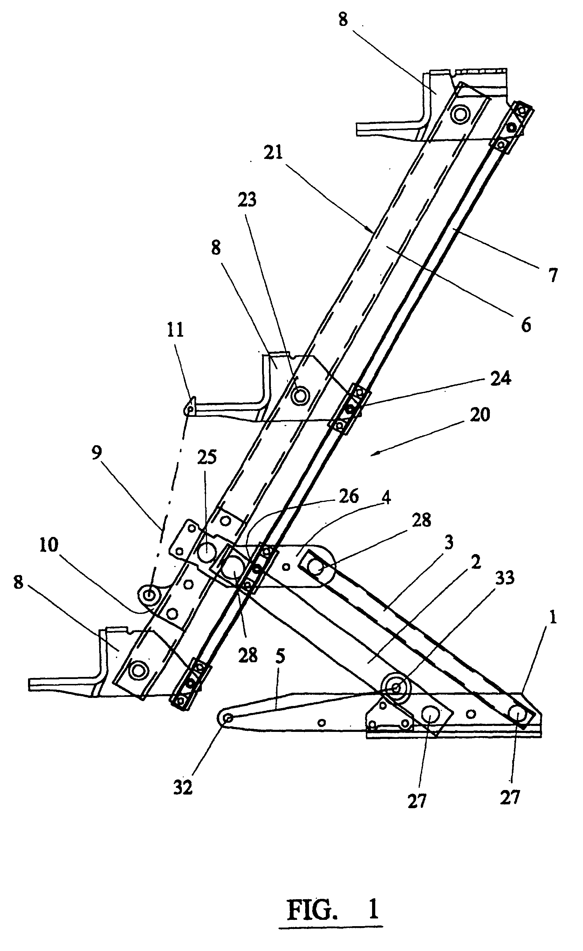

The design of plough shown in Figure 1, in relation to the construction of the plough beam and the plough bodies, is effectively a standard fully mounted infinitely variable plough. However, as mentioned above the invention may be applied to non reversible type ploughs, and equally to ploughs not having the capability of adjusting the furrow width automatically.

The lateral adjustment mechanism which is able to move the plough frame laterally, when required, includes a control arm 4 which is mounted on the plough beam 6. The control arm 6 is pivotally connected both to the plough beam 6 via a third pivot 25, and also to the control rod 7 via a fourth pivot 26. Lateral control of the position taken up by the plough beam 6 is achieved by provision of a pair of connecting links 2 and 3, each being mounted at one end on the mounting bracket 1 via a respective fifth pivot 27 and being connected at its opposite end to the control arm 4 via a respective sixth pivot 28. The pairs of fifth pivots 27 and sixth pivots 28 are located at the corners of a parallelogram, so that the links 2 and 3 function as a parallelogram linkage, in order to move the plough beam 6 and the control rod 7 laterally, during which time the attitude of the control arm 4 remains constant, i.e. it maintains the same transverse extent relative to the ploughing direction, so that the supports 8 always face in the ploughing direction, regardless of the lateral adjustment position taken up (see Figure 3 again).

If it is desired to adjust the lateral separation between adjacent furrows formed by successive plough bodies, an adjustment device may be provided, shown in dashed outline by reference 9, which extends between a fixed bracket 10 on the plough beam 6, and an end bracket 11 on one of the supports 8. The adjustment device 9 may take the form of an actuating cylinder, and upon its actuation, it can cause the support 8 to pivot about first pivot 23 relative to the plough beam 6, but by reason of the pivotal connection of the support 8 to the control rod 7, angular adjustment of the plough beam 6 and control rod 7 also takes place automatically, so that the adjusted support 8 (and all of the other supports 8 because they are interconnected) maintain the same direction facing the ploughing direction, but of course with a different furrow width being produced by the plough bodies. The adjustment of the lateral separation of the plough bodies 22 (by operation of the adjustment device 9) takes place immediately, since the plough is of the fully mounted type.

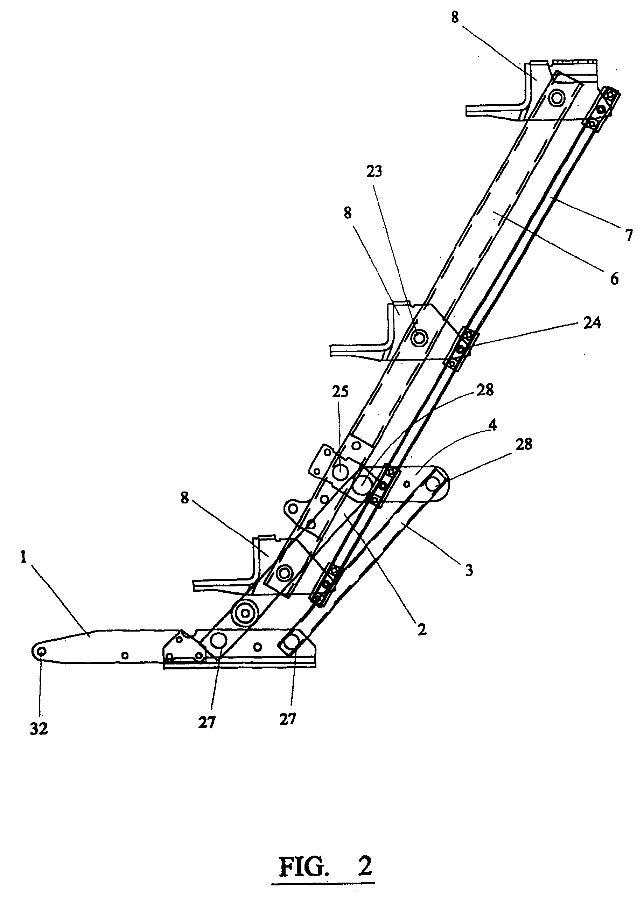

When it is desired to adjust the plough beam laterally, to take up a different ploughing position e.g. as shown in Figure 2 or Figure 3, an actuator 5 e.g. a hydraulic actuator cylinder, is operated in order to pivot the links 2 and 3 laterally relative to mounting bracket 1. The actuator 5 reacts between a mounting point 32 on the bracket 1 and a connection 33 to the parallelogram linkage 2, 3. It will be apparent from Figure 3 that operation of the actuator 5 is able to effect substantial lateral adjustment of the plough frame 21 relative to the mounting bracket 1, and with consequent substantial adjustment laterally of the positions taken-up by the plough bodies 22. This adjustment takes place via pivotal adjustment of the linkage 2, 3, under the operation of the actuator 5, and through a substantial angle of adjustment. As can be seen in Figure 3, the links 2, 3 are capable of moving angularly through a range of angular movement up to about 90°, and this is unique in application of a lateral adjustment mechanism to a fully mounted plough. This wide range of adjustment allows the lateral position of the plough bodies 22 to be adjusted through substantial distances laterally, and allows for optimum ploughing to take place, despite the size of tractor wheels, or the design of the tractor or other propelling vehicle which is used to propel the plough through the ground.

In the case of a reversible plough, as shown in Figure 1, the mounting bracket 1 will be designed so as to be capable of allowing the plough frame 21 to rotate through approximately 180° about a horizontal axis 31 (see Figure 3) extending generally in the ploughing direction, in order to adjust the plough bodies between right side ploughing and left side ploughing.

A plough according to the invention therefore can readily be coupled to the rear of a tractor having wide tyres, or twin tyres, or with a tractor driven by belts. Such tractors are unable to drive along an existing furrow, since the wheels are too wide to go in the furrow as per traditional plough methods. However, with the lateral adjustment mechanism in the plough of the invention, there is no problem in following the tractor even when the wheels are not able to run along one of the existing furrows. It is adjusted into any required lateral position to suit a particular tractor. This is an advantage since the same tractor also is often used for sowing, drilling and fertilizing. It can then also be used for ploughing without need to modify the tyres.

The plough can of course also be used on tractors with standard (narrow) tyres, and which is driven with one each of the forward and rear wheels running in a previously formed furrows.

So called belt type tractors often have lower lifting heights than conventional tractors, but with the lateral adjustment mechanism in the plough according to the embodiment of the invention, the lifting height can be made higher, and then there will be more clearance between the plough and the ground when reversing the plough.

Another big advantage with the adjustment mechanism is that it is possible to move the plough over to the opposite side and plough right up to the edge of a field, as illustrated in Figure 3.

Therefore, the invention disclosed herein is of a fully mounted plough, and preferably having reversable plough bodies, and having a unique design of lateral adjustment mechanism, effective between the coupling means (mounting bracket 1 and headstock 30) which enables the forward end of the plough frame to be fully mounted, and so that a substantial range of lateral adjustment movement of the plough bodies can be obtained. This allows the plough bodies to be adjusted to suit different types of propelling vehicle, and in particular tractors which are not able to follow previously formed furrows in the ground, as per conventional designs of agricultural tractor.

It is known to provide semi-mounted ploughs with a lateral adjustment mechanism, see for example GB 2119614, but this utilises a turn buckle or cylinder, having a very small range of adjustment, and which is provided solely for the purposes of allowing adjustment of the width of the first furrow, so as to be as wide as the other furrows. In this known arrangement of a semi-mounted plough, the adjustment is only needed when the plough is required to be hitched to a tractor with a different wheel separation distance. After the adjustment is completed, the position of the main linkage is not changed, and this known plough design is only able to work with a tractor which operates with the wheels of the tractor running in previously formed furrows.

By contrast, the invention is applicable solely to a fully mounted plough, and which has an actuator (5) which is capable of effecting a substantial range of lateral adjustment movement of the plough frame 21 (and therefore also of the plough bodies 22), and which is achieved by angular adjustment movement of the links 2, 3 through a substantial range of angular movement i.e. up to about 90°, as shown in Figure 3. This gives a wide range of lateral adjustment movement of the plough bodies, and provides for efficient ploughing with many different types of propelling vehicle, and including in particular agricultural tractors having wide tyres, twin tyres, or a tractor driven by belts, which are unable to drive along existing furrows.

The adjustment device 9 can be used to carry out relatively minor adjustment of furrow widths produced by the plough bodies, and because the plough is of the fully mounted type, the adjustment takes place almost immediately, and certainly when the plough is in the lifted position, whereas when the plough is adjusted when it is in the ground, it allows for forceable adjustment of the plough bodies to the new adjusted positions.

## Claims

1. A fully mounted plough (20) having a plough frame (21), coupling means (30) at the forward end of the frame (21) to fully mount the plough on the rear of a propelling vehicle, a number of plough bodies (22) spaced apart along the length of the frame (21), and a lateral adjustment mechanism (2, 3, 4) for moving the plough frame laterally relative to the coupling means when it is required to adjust the ploughing positions of the plough bodies relative to the propelling vehicle, in which:
a) the plough frame (21) includes a plough beam (6) having supports (8) arranged along its length and each mounting a respective plough body (22), said supports (8) being pivotally mounted on the beam (6) via respective first pivots (23);
b) a control rod (7) extends alongside the plough beam (6) and is pivotally connected to said supports (8) via respective second pivots (24);
c) the adjustment mechanism includes a control arm (4) mounted on the plough beam (6) and which is operative to control the lateral position of the plough beam (6) relative to the coupling means (1), said control arm being pivotally connected to the plough beam (6) and to the control rod (7) via third and fourth pivots (25, 26), respectively;
d) the first and second pivot (23, 24) associated with each support (8), together with said third and fourth pivots (25, 26), are located each at a respective corner of a parallelogram type linkage, whereby during lateral adjustment of the plough beam (6), the supports (8) mounting the plough bodies (22) always face in the same ploughing direction;
e) the coupling means (30) includes a mounting bracket (1) which is connectable to the rear of the propelling vehicle and to which the control arm (4) is connected via a pair of parallel links (2, 3);
f) each of said links (2, 3) is pivotally connected at one end to the mounting bracket (1) via a respective fifth pivot (27) and at its opposite end is pivotally connected to the control arm (4) via a respective sixth pivot (28);
g) the pairs of fifth and sixth pivots (27, 28) are located at the corners of a parallelogram so that the links (2,3) function as a parallelogram linkage to move the plough beam (6) and the control rod (7) laterally:
**characterised in that**:
i) the geometry of the mounting of the links (2, 3) on the mounting bracket (1) and the control arm (5) is such that the links (1, 2) are adjustable through a range of angular movement of up to about 90° to permit a substantial range of lateral adjustment movement of the plough frame (21);
ii) an actuator (5) is coupled with the mounting bracket (1) and which is operative to adjust the frame (21) laterally, when lateral adjustment of the plough bodies (22) is required, via angular adjustment of the links (2, 3) relative to the mounting bracket (1), such adjustment having no influence on the furrow width separation of the plough bodies (21) and
iii)an adjuster device (9) is operative, independently of the actuator (5), to effect lateral adjustment of the furrow width separation when required.

2. A plough according to claim 1, **characterised in that** the actuator (5) is operative between a mounting point (32) on the bracket (1) and one of the links (2), to effect joint movement of the links (2, 3) in order to adjust the lateral positions of the plough bodies (22).

3. A plough according to claim 1 or 2, **characterised in that** the adjuster device (9) is connected between a fixed bracket (10) mounted on the plough beam (5) and a mounting point (11) on a selected one of the supports (8).

4. A plough according to any one of the preceding claims, **characterised in that** a pair of reversible plough bodies (22) is mounted on each support (8).

5. A plough according to claim 4, **characterised in that** the mounting bracket (1) is rotatably mounted on a headstock (30) to permit rotation of the plough beam (6) about a substantially horizontal axis (31) extending in the ploughing direction through the mounting bracket (1), and through approximately 180° between right side ploughing and left side ploughing of the plough bodies.

## Patentansprüche

1. Ein Anbaupflug (20) mit einem Pflugrahmen (21), mit einer Kupplungsvorrichtung (1, 30) am vorderen Ende des Rahmens (21) zum Befestigen des Pflugs an der Rückseite eines Antriebsfahrzeugs, mit einer Anzahl von Pflugkörpern (22), welche in gewissen Abständen entlang der Breite des Rahmens (21) angebracht sind, und mit einem Querverstell-Mechanismus (2, 3, 4), mit dem sich der Pflugrahmen relativ zu der Kupplungsvorrichtung seitlich verstellen lässt, wenn eine Anpassung der Pflügepositionen der Pflugkörper relativ zum Antriebsfahrzeug notwendig ist, bei dem:
a) der Pflugrahmen (21) einen Pflugbaum (6) mit entlang der Länge des Pflugbaums angebrachten Halterungen (8) aufweist, welche jeweils einen Pflugkörper (22) aufnehmen, wobei die Halterungen (8) über erste Drehgelenke (23) schwenkbar mit dem Pflugbaum (6) verbunden sind;
b) längsseits des Pflugbaums eine Steuerstange (7) angeordnet ist, welche über zweite Drehgelenke (24) schwenkbar mit den Halterungen (8) verbunden ist;
c) der Querverstell-Mechanismus einen mit dem Pflugbaum (6) verbundenen Lenkerarm (4) umfasst, der zur Festlegung der seitlichen Position des Pflugbaums (6) relativ zu der Kupplungsvorrichtung (1, 30) dient, wobei der Lenkerarm über dritte und vierte Drehgelenke (25, 26) mit dem Pflugbaum (6) und der Steuerstange (7) schwenkbar verbunden ist;
d) sich das mit jeder der Halterungen (8) verbundene erste und zweite Drehgelenk (23, 24), zusammen mit den dritten und vierten Drehgelenken (25, 26), jeweils an einer Ecke eines als Parallelogramm ausgebildeten Gestänges befinden, wodurch die Halterungen (8) für die Pflugkörper (22) während der Querverstellung des Pflugbaums (6) stets in dieselbe Pflügerichtung zeigen;
e) die Kupplungsvorrichtung (1, 30) einen Befestigungsteil (1) umfasst, der an der Rückseite des Antriebsfahrzeugs befestigt werden kann, und mit dem der Lenkerarm (4) über ein Paar von parallelen Verbindungsstangen (2, 3) verbunden ist;
f) jede der Verbindungsstangen (2, 3) an einem Ende über ein fünftes Drehgelenk (27) schwenkbar mit dem Verbindungsflansch (1) und an ihrem anderen Ende über ein sechstes Drehgelenk (28) mit dem Lenkerarm (4) schwenkbar verbunden ist;
g) sich die Paare von fünften und sechsten Drehgelenken (27, 28) an den Ecken eines Parallelogramms befinden, so dass die Verbindungsstangen (2, 3) als Parallelogrammführung zur Querverstellung des Pflugbaums (6) und des Lenkerarms (7) dienen;
**dadurch gekennzeichnet, dass**
i) die Befestigung der Verbindungsstangen (2, 3) auf dem Befestigungsteil (1) und dem Lenkerarm (4) geometrisch so ausgeführt ist, dass die Verbindungsstangen (2, 3) über einen Winkelbereich von bis zu etwa 90° verschwenkbar sind, wodurch der Pflugrahmen (21) über einen beträchtlichen Bereich hinweg seitlich verstellbar ist;
ii) ein Stellglied (5) mit dem Befestigungsteil (1) verbunden ist, mit dem der Rahmen (21) seitlich verstellbar ist, wenn eine seitliche Verstellung der Pflugkörper (22) erforderlich ist, was durch Verschwenken der Verbindungsstangen (2, 3) relativ zum Befestigungsteil (1) erreicht wird, wobei eine derartige Verstellung keinen Einfluss auf die Furchenweite der Pflugkörper (21) hat, und
iii) eine unabhängig von dem Stellglied (5) arbeitende Einstellvorrichtung (9) vorgesehen ist, mit der die Furchenweite falls erforderlich veränderbar ist.

2. Ein Pflug gemäß Anspruch 1, **dadurch gekennzeichnet, dass** das Stellglied (5) zwischen einem Befestigungspunkt (32) auf dem Flansch (1) und einer der Verbindungsstangen (2) arbeitet und eine gemeinsame Verschwenkung der Verbindungsstangen (2, 3) bewirkt, um die seitlichen Positionen der Pflugkörper (22) zu verstellen.

3. Ein Pflug gemäß Anspruch 1 oder Anspruch 2, **dadurch gekennzeichnet, dass** die Einstellvorrichtung (9) zwischen einer feststehenden Schelle (10) am Pflugbaum (6) und einem Befestigungspunkt (11) an einer bestimmten Halterung (8) angebracht ist:

4. Ein Pflug gemäß einem der vorhergehenden Ansprüche, **dadurch gekennzeichnet, dass** an jeder Halterung (8) ein Paar von umkehrbaren Pflugkörpern (22) befestigt ist.

5. Ein Pflug gemäß Anspruch 4, **dadurch gekennzeichnet, dass** der Befestigungsteil (1) drehbar an einem Kopfstück (30) befestigt ist; damit eine Rotation des Pflugbaums (6) um etwa 180°, zwischen rechtsseitigem Pflügen und linksseitigem Pflügen der Pflugkörper, ermöglicht wird, wobei die Rotation um eine im wesentlichen horizontale Achse (31) erfolgt, die sich in Pflügerichtung durch den Befestigungsteil (1) hindurch erstreckt.

## Revendications

1. Charrue entièrement montée (20) ayant un châssis de charrue (21), des moyens de couplage (30) à l'extrémité avant du châssis (21) pour monter entièrement la charrue sur l'arrièr d'un véhicule propulseur, un nombre de corps de charrue (22) espacés le long du châssis (21), et un mécanisme de réglage latéral (2, 3, 4) pour déplacer le châssis de charrue latéralement relativement aux moyens de couplage quand il est nécessaire de régler les positions de labourage des corps de charrue relativement au véhicule de propulsion, dans lequel :
(a) le châssis de charrue (21) comprend une poutre de charrue (6) ayant des supports (8) agencés le long de sa longueur et sur chacun desquels est monté un corps de charrue (22) respectif, lesdits supports (8) étant montés de façon à pouvoir pivoter sur la poutre (6) par l'intermédiaire de premiers pivots (23) respectifs ;
(b) une tige de contrôle (7) s'étend le long de la poutre de charrue (6) et est connectée de façon à pouvoir pivoter aux dits supports par l'intermédiaire de seconds pivots (24) respectifs ;
(c) le mécanisme de réglage comprend un bras de contrôle (4) monté sur la poutre de charrue (6) et qui peut être manoeuvré pour contrôler la position latérale de la poutre de charrue (6) relativement aux moyens de couplage (1), ledit bras de contrôle étant connecté de façon à pouvoir pivoter à la poutre de charrue (6) et à la tige de contrôle (7) par l'intermédiaire respectivement de troisièmes et quatrièmes pivots (23) ;
(d) les premier et second pivots (23, 24) associés à chaque support (8), ainsi que lesdits troisième et quatrième pivots (25, 26), sont situés chacun à un coin respectif d'un Lien de type parallélogramme, par lequel durant le réglage latéral de la poutre de charrue (6), les supports (8) sur lesquels sont montés les corps de charrue (22) sont toujours orientés Bans la même direction de labourage ;
(e) les moyens de couplage (30) comprennent un support de montage (1) qui peut être connecté à l'arrièr du véhicule de propulsion et auquel le bras de contrôle (4) est connecté par l'intermédiair dune paire de bielles parallèles (2, 3) ;
(f) chacune desdites bielles est, à une extrémité, connectée de façon à pouvoir pivoter au support de montage (1) par l'intermédiaire d'un cinquième pivot (27) respectif et à son extrémité opposée est connectée de façon à pouvoir pivoter au bras de contrôle (4) par l'intermédiaire d'un sixième pivot (28) respectif ;
(g) les paires de cinquièmes et sixièmes pivots (27, 28) sont situées aux coins d'un parallélogramme de façon telle que les bielles (2, 3) fonctionnent comme un lien parallélogramme pour déplacer la poutre de charrue (6) et la tige de contrôle (7) latéralement :
**caractérisé en ce que** :
(i) la géométrie du montage des bielles (2, 3) sur le support de montage (1) et le bras de contrôle (5) est telle que les bielles (1, 2) soient réglables dans une gamme de mouvements angulaires pouvant aller jusqu'à environ 90° pour permettre un éventail substantiel de mouvement de réglage latéral du châssis de charrue (21);
(ii) un actionneur (5) est couplé au support de montage (1) et peut être manoeuvré pour régler le châssis (21) latéralement, quand un réglage latéral des corps de charrue (22) est nécessaire, par l'intermédiaire d'un réglage angulaire des bielles (2, 3) relativement au support de montage (1), un tel réglage n'ayant aucune influence sur la largeur entre sillons des corps de charrue (22) et
(iii) un dispositif de réglage (9) peut être manoeuvré, indépendamment de l'actionneur (5), pour effectuer un réglage latéral de la largeur entre sillon si nécessaire.

2. Charrue selon la revendication 1, **caractérisée en ce que** l'actionneu (5) peut être manoeuvré entre un point de montage (32) sur le support (1) et une des bielles (2), pour effectuer un mouvement joint des bielles (2, 3) dans le but de régler les positions latérales des corps de charrue (22).

3. Charrue selon la revendication 1 ou 2, **caractérisée en ce que** le dispositif de réglage (9) est connecté entre un support fixe (10) et monté sur la poutre de charrue (6) et un point de montage (11) sur un des supports (8) choisi.

4. Charrue selon l'une quelconque des revendications précédentes, **caractérisée en ce qu'**une paire de corps de charrue (22) réversibles est montée sur chaque support (8).

5. Charrue selon la revendication 4, **caractérisée en ce que** le support de montage (1) est monté de manière à pouvoir pivoter sur une tête (30) pour permettre la rotation de la poutre de charrue (6) autour d'un axe (31) sensiblement horizontal s'étendant dans la direction de labourage par le support de montage (1), et approximativement sur 180° entre le labourage à droite et le labourage à gauche des corps de charrue.
